# FASCICULE DE BREVET EUROPEEN

(11) **EP 1 946 050 B1**
(45) Date de publication et mention de la délivrance du brevet: **27.06.2018**
(21) Numéro de dépôt: 06831086.1
(22) Date de dépôt: 07.11.2006
(51) Int. Cl.: G01F 3/08

(54) **CHAMBRE DE MESURE CYLINDRIQUE DE COMPTEUR DE LIQUIDE**
ZYLINDRISCHE MESSKAMMER EINES WASSERMESSERS
LIQUID METER CYLINDRICAL MEASUREMENT CHAMBER

(30) Priorité: 10.11.2005 FR 0511454
(43) Date de publication de la demande: 23.07.2008
(73) Titulaire: DIEHL METERING SAS, 68300 Saint-Louis (FR)
(72) Inventeur: MEISTERMANN, Christophe, F-68460 Lutterbach (FR); MARCIPONT, Arnauld, F-68000 Colmar (FR); MUNCK, Christophe, F-68130 Hausgauen (FR)
(74) Mandataire: Nuss, Laurent
(86) Numéro de dépôt international: PCT/FR2006/002484
(87) Numéro de publication internationale: WO 2007/057541

(56) Documents cités:
- EP-A- 0 370 253
- EP-A- 1 255 095
- DE-C- 968 398
- FR-A- 2 834 786
- GB-A- 527 269
- GB-A- 661 809
- US-A- 300 628
- US-A- 2 338 609
- US-A- 3 874 235

## Description

L'invention concerne une chambre de mesure cylindrique de compteur de liquide à piston oscillant comportant au moins une paroi latérale périphérique, un couvercle et un fond, ledit fond supportant un château, se présentant sous la forme d'une pièce cylindrique ouverte munie, au voisinage de son centre, d'un plot cylindrique de diamètre inférieur à celui dudit château, pour former, entre la surface périphérique interne dudit château et la surface périphérique externe du plot, un chemin de guidage circulaire, ladite chambre renfermant un piston de corps cylindrique animé en déplacement par le liquide circulant à l'intérieur de ladite chambre, ledit piston étant muni intérieurement d'un axe coaxial audit corps du piston, cet axe pouvant s'insérer dans le chemin de guidage circulaire, de manière à réaliser un guidage du piston lors de ses oscillations à l'intérieur de la chambre.

La réalisation d'un compteur de liquide fiable et inviolable pose de nombreux problèmes aux personnes versées dans ce domaine. L'élément principal d'un compteur de liquide est constitué par une chambre cylindrique. C'est le cas de la chambre de mesure décrite dans le brevet FR 2 706 033. Une telle chambre de mesure cylindrique comprend généralement une paroi latérale, un fond, un couvercle, et renferme un piston également cylindrique. Un plot, affectant la forme d'un cylindre de petite taille, est supporté par le fond de la chambre alors qu'un axe, de diamètre sensiblement identique, équipe le piston. Le fond de la chambre porte également un cylindre creux appelé château, disposée autour dudit plot de manière à délimiter un chemin de guidage le long de la surfaces périphérique externe du plot ou externe du château. L'axe du piston coopère avec ladite surface périphérique externe du plot de manière à suivre le chemin de guidage. La chambre est également équipée d'une entrée et d'une sortie de liquide à compter ainsi que d'une paroi compartimentant ladite chambre afin de créer une circulation de liquide à l'intérieur de la chambre selon un parcours déterminé. La circulation du liquide provoque un mouvement du piston, dans ce cas une rotation de son axe autour du plot, et un dispositif afficheur, généralement placé au niveau du couvercle de la chambre, permet de compter le nombre de tours effectués par l'axe du piston et ainsi de calculer la consommation en liquide. Ce type de compteur de liquide présente cependant certains inconvénients. Les chocs du piston, lors de son mouvement à l'intérieur de la chambre, génèrent un bruit important, notamment par transmission des vibrations aux parties externes du compteur qui font alors office de résonateur et d'amplificateur. De plus, le plot et le château étant réalisés sous formes de deux pièces séparées, il est délicat d'obtenir une bonne coaxialité de ces deux pièces, ainsi, le mouvement du piston peut être irrégulier. En effet, dans les chambres de mesure actuelles, le château et le fond de ladite chambre sont réalisés sous la forme d'une seule pièce alors que le plot est rapporté. Un autre inconvénient vient de la conception de la paroi permettant d'imposer un sens de circulation au liquide de l'entrée vers la sortie de la chambre. En effet, ladite paroi est ici insérée dans des rainures ménagées dans les parois externe du château et interne de la chambre ainsi que dans le couvercle. Chacune de ses rainures est susceptible d'être une source de fuite de liquide et donc une source d'imprécision de la mesure. Par ailleurs, la taille réduite des orifices d'entrée et de sortie décrits dans ce document induit un temps de remplissage important de la chambre, entraînant des différences de pression au sein de la dite chambre, ce qui peut mettre les pièces du compteur sous contrainte voire les endommager et générer une augmentation de la perte de charge. Enfin, il est fréquent que des particules solides, telles que du sable, soient présentes dans le liquide à compter.

Le document US 3 874 235 décrit une chambre de mesure cylindrique de compteur de liquide à piston oscillant, comportant un plot et un château réalisés sous la forme d'une seule pièce.

Un but de l'invention est donc de proposer une chambre de mesure dont la conception permet de disposer d'un plot et d'un château coaxiaux afin d'assurer un chemin de guidage régulier de l'axe du piston.

Un autre but est de proposer une chambre cylindrique de mesure générant moins de bruit et dont le risque de fuite est minimisé.

Enfin un dernier but de l'invention est de proposer une chambre cylindrique de mesure dans laquelle l'influence des différences de pression et des particules solides dans le liquide soit suffisamment faible pour éviter tout endommagement des pièces de ladite chambre.

A cet effet, l'invention a pour objet une chambre de mesure cylindrique de compteur de liquide à piston oscillant, du type comportant au moins une paroi latérale périphérique, un couvercle et un fond, ledit fond supportant un château, se présentant sous la forme d'une pièce cylindrique ouverte munie, au voisinage de son centre, d'un plot cylindrique de diamètre inférieur à celui dudit château, pour former, entre la surface périphérique interne dudit château et la surface périphérique externe du plot, un chemin de guidage circulaire, ladite chambre renfermant un piston de corps cylindrique animé en déplacement par le liquide circulant à l'intérieur de ladite chambre, ledit piston étant muni intérieurement d'un axe coaxial audit corps du piston, cet axe pouvant s'insérer dans le chemin de guidage circulaire, de manière à réaliser un guidage du piston lors de ses oscillations à l'intérieur de la chambre,le plot et le château étant réalisés sous la forme d'une seule pièce de manière à garantir la coaxialité dudit plot et dudit château, caractérisée en ce que les parois périphériques interne et externe du piston ainsi que la paroi latérale interne de la chambre sont munies de cannelures axiales afin notamment d'y piéger les impuretés présentes dans le liquide à compter.

L'invention a également pour objet un compteur de liquide du type comprenant, renfermée à l'intérieur d'un corps, une chambre de mesure cylindrique, ladite chambre comportant au moins une paroi latérale périphérique, un couvercle et un fond, ledit fond supportant un château, se présentant sous la forme d'une pièce cylindrique ouverte munie, au voisinage de son centre, d'un plot cylindrique de diamètre inférieur à celui dudit château, ladite chambre renfermant un piston de corps cylindrique animé en déplacement par le liquide circulant à l'intérieur de ladite chambre, ledit piston étant muni intérieurement d'un axe coaxial audit corps du piston, cet axe pouvant s'insérer entre la surface périphérique interne du château et le plot afin de coopérer, par sa surface latérale, avec la surface latérale extérieure du plot de manière à réaliser un guidage du piston lors de ses oscillations à l'intérieur de la chambre, ledit compteur comportant en outre un dispositif entraîneur, généralement magnétique, présentant un arbre entraîné en rotation par le mouvement du piston, ce dispositif entraîneur étant couplable à un dispositif entraîné permettant de compter les rotations dudit dispositif entraîneur, caractérisé en ce que la chambre de mesure est du type précité.

L'invention sera bien comprise à la lecture suivante d'exemples de réalisation, en référence aux dessins annexés dans lesquels :
La figure 1 représente une vue de dessus en coupe d'une chambre cylindrique de mesure conforme à l'invention,
La figure 2 représente une vue en coupe de la chambre de la figure 1,
La figure 3 représente une vue en perspective de la chambre de la figure 1 et
La figure 4 représente une vue éclatée d'un compteur de liquide conforme à l'invention.

La chambre 1 de mesure, objet de l'invention, constitue l'élément principal d'un compteur de liquide. De tels compteurs sont utilisés pour mesurer une consommation en liquide. Leur principale utilisation est celle de compteurs d'eau. Comme décrit précédemment, la chambre 1 de mesure se présente sous la forme d'une pièce creuse cylindrique comportant une paroi 3 latérale, un fond 8 et un couvercle 4. Elle est munie, au voisinage du centre du fond 8, d'un plot 10 présentant une forme cylindrique, le plot 10 étant entouré d'une pièce creuse cylindrique appelée château 9. De manière analogue aux chambres de mesure de compteur de liquide existantes, la chambre 1 objet de l'invention est munie d'un piston 2 monté libre à l'intérieur de ladite chambre 1. Ce piston 2 est muni d'un axe solidarisé au corps du piston 2, une extrémité 13 dudit axe étant destinée à coopérer avec la paroi périphérique externe du plot 10 de manière à guider le piston lors de son mouvement. En effet, la circulation de liquide à l'intérieur de la chambre 1 induit un déplacement du piston 2. De manière générale, ce mouvement est constitué d'une rotation de l'axe du piston 2 autour du plot 10. La quantité de liquide traversant la chambre 1 détermine le nombre de rotations dudit axe du piston 2. Ainsi, il suffit de compter le nombre de rotations effectuées par cet axe, au moyen d'un dispositif approprié qui sera décrit ultérieurement, pour connaître la quantité de liquide ayant traversé la chambre 1. De manière caractéristique, le plot 10 et le château 9 sont réalisés d'une seule pièce. Cette pièce est ensuite rapportée et solidarisée sur le fond 8 de la chambre, contrairement aux chambres de l'état de la technique dans lesquelles château et fond de chambre étaient réalisés d'une seule pièce, le plot étant ensuite rapporté. Cette conception nouvelle permet d'assurer la coaxialité du château 9 et du plot 10 afin d'obtenir un meilleur guidage du piston 2 lors de son mouvement.

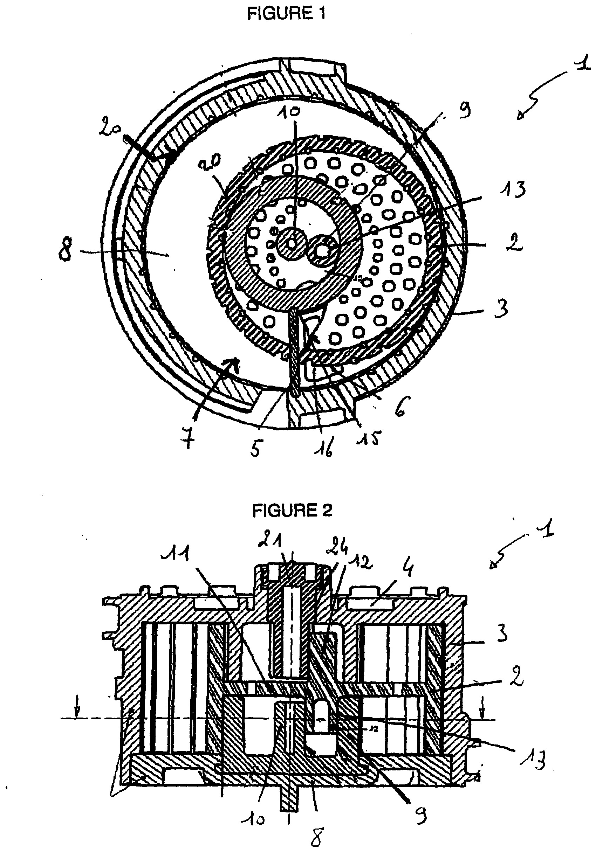

Dans le mode de réalisation représenté aux figures 1 et 2, l'axe du piston 2 destiné à se déplacer autour du plot 10, formant axe pivot, se présente sous la forme de deux demi-axes 12, 13 portés chacun par une face d'une cloison 11 compartimentant transversalement le corps du cylindre formant le piston 2. En effet, le piston 2 est muni d'une cloison 11, orthogonale à son axe, généralement placée au voisinage de la moitié de la hauteur du cylindre constituant ledit piston 2. Chaque face de ladite cloison 11 est munie d'un demi-axe 12, 13, constitué ici d'une pièce cylindrique de faible hauteur. L'un 13 des demi-axes coopère avec le plot 10 pour assurer le guidage du piston 2, l'autre 12 coopère avec un dispositif 21 permettant de compter le nombre de rotations de l'axe du piston 2. Le piston 2 est donc mis en mouvement sous l'action d'une circulation de liquide à l'intérieur de la chambre 1. Dans ce mode de réalisation, la chambre 1 comporte au moins une entrée et une sortie de fluide disposées de part et d'autre d'une cloison 5 fixe s'étendant radialement entre la surface périphérique intérieure de ladite chambre 1 et la surface périphérique extérieure du château 9, de manière à imposer un parcours au fluide entre l'entrée 6 et la sortie 7 de la chambre 1. Le piston 2 est muni, le long d'une de ses génératrices, d'une ouverture 15 radiale, telle qu'une échancrure, permettant d'enfiler ledit piston 2 sur la cloison 5, de telle sorte que les rebords de l'échancrure, dites lèvres, du piston 2 glissent le long des parois de la cloison 5 fixe lors du déplacement de l'axe du piston dans son chemin de guidage circulaire. De manière caractéristique, la paroi 5 fixe est réalisée sous la forme d'une seule pièce avec la paroi périphérique de la chambre 1 et/ou avec la paroi périphérique du château 9, de manière à améliorer l'étanchéité des liaisons. La paroi 5 fixe, disposée à l'intérieur de la chambre 1, permet de compartimenter ladite chambre et d'imposer un parcours au liquide entre l'entrée 6 et la sortie 7 de la chambre 1. Ainsi, l'intégralité du liquide pénétrant dans la chambre 1 contribue à déplacer le piston 2. Tout le liquide est donc compté. La présence de cette paroi 5 fixe oblige le piston 2 à adopter une conception particulière. En effet, celui-ci présente une ouverture 15 radiale grâce à laquelle il peut s'enfiler sur ladite paroi 5. Dans le mode de réalisation représenté aux figures, cette ouverture 15 est ménagée dans la cloison 11 du piston 2 ainsi que dans sa paroi latérale. Ainsi, lors du mouvement du piston, seul le demi-axe 13 peut tourner autour du plot 10. Le reste du piston 2 coulisse le long de la paroi 5 et oscille entre plusieurs positions de manière à autoriser la rotation du demi-axe 13 autour du plot 10. Comme la paroi 5 fixe est réalisée d'une seule pièce avec la paroi 3 latérale de la chambre 1 et/ ou la paroi latérale du château 9, on réduit le nombre de raccords entre pièces différentes, réduisant ainsi les risques de fuites dans la chambre 1 et le volume de liquide non compté.

Dans un mode de réalisation préféré, le chemin de guidage circulaire de l'axe du piston 2 délimité par la surface périphérique extérieure du plot 10 et la surface périphérique intérieure du château 9 est dimensionné pour autoriser l'axe du piston 2 à prendre appui indifféremment sur l'une ou l'autre des deux surfaces, assurant ainsi un guidage fin du piston 2, lors de son mouvement, notamment pour réduire le bruit généré par ledit mouvement. En effet, dans l'état de la technique, le chemin de guidage de l'axe du piston 2 est dimensionné de manière à ce que ledit axe ne puisse prendre appui que sur la surface périphérique externe du plot. Dans ce cas, lorsque l'axe du piston se décale vers l'extérieur du chemin, la paroi latérale du piston entre en contact avec la paroi périphérique externe du château avant que ledit axe du piston ne soit en contact avec la paroi périphérique interne dudit château. Ainsi, l'axe du piston ne peut pas entrer en contact avec le château avec une conception de chambre de mesure traditionnelle. Au lieu de ça, des frottements entre parois du piston et du château ont lieu lors du mouvement du piston générant des bruits et vibrations importants. Dans le mode de réalisation décrit ici, le demi-axe 13 du piston peut prendre appui sur la paroi interne du château 9, les parois respectivement interne du piston 2 et externe du château 9 ne peuvent donc pas être en contact. En effet, la chambre 1 est conçue de manière à, lorsque la surface externe du plot 10 est en contact avec la surface externe du demi-axe 13, l'écartement entre la surface externe du château 9 et la surface interne du piston 2 soit supérieure à celui entre la surface externe du demi-axe 13 et interne du château 9. Les seuls contacts, lors du mouvement du piston 2, ont lieu entre le demi-axe 13 du piston et, soit le plot 10, soit la surface périphérique interne du château 9. Les surfaces de contact mises en jeu étant beaucoup plus faibles que dans les compteurs de l'état de la technique, le compteur objet de l'invention génère moins de bruit et de vibrations.

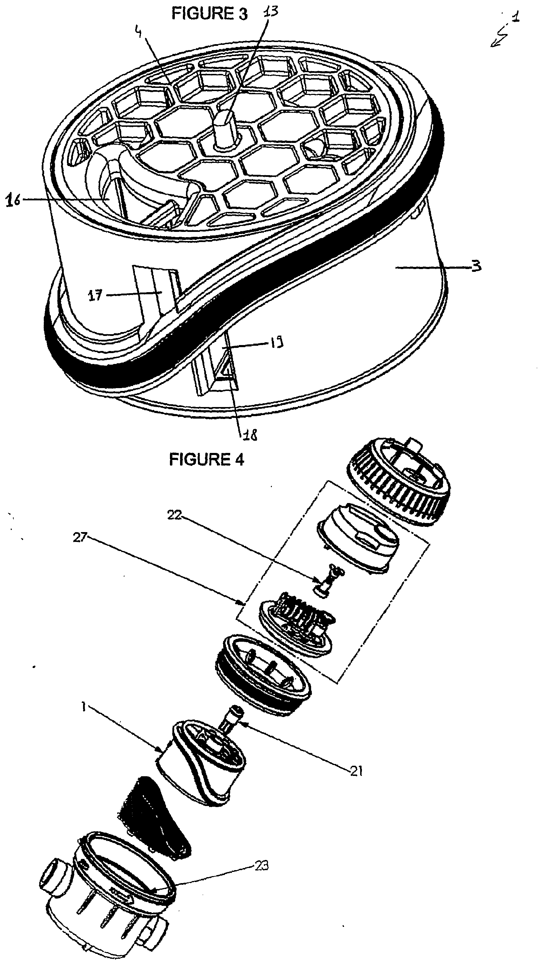

Dans un mode de réalisation préféré, représenté à la figure 3, la chambre 1 de mesure comporte au moins deux entrées 16, 17, l'une 16 située dans le fond 8 de la chambre 1, l'autre 17 étant positionnée sur la paroi latérale de ladite chambre 1 et/ou deux sorties 18, 19, l'une, 18, située dans le fond 8 de la chambre 1, l'autre, 19, étant positionnée sur la paroi latérale de ladite chambre 1, afin notamment de diminuer le temps de remplissage de la boîte et de réduire les différences de pression à l'intérieur de la chambre 1. En effet, l'augmentation de la taille des ouvertures d'entrée et de sortie est susceptible d'augmenter le risque de fuites dans la chambre 1. Une solution avantageuse pour diminuer le temps de remplissage de ladite chambre 1 est donc de multiplier le nombre de ces ouvertures d'entrée et de sortie. Les différences de pression internes à la chambre 1 sont donc minimisées et n'ont lieu que sur un temps court. Les contraintes induites sur les pièces constituant ladite chambre 1, s'en trouvent donc fortement diminuées, ce qui assure une meilleure tenue dans le temps de ladite chambre 1. Une autre amélioration de la chambre 1, objet de l'invention, par rapport aux chambres de mesure existantes vient du fait que les parois périphériques interne et externe du piston 2 ainsi que la paroi latérale interne de la chambre 1 sont munies de cannelures 20 axiales afin notamment d'y piéger les impuretés présentes dans le liquide à compter. Ces cannelures 20 permettent donc d'éviter une usure prématurée des pièces de la chambre 1 et assurent un mouvement du piston 2 sans blocage à cause d'impuretés. Cependant, ces cannelures 20 ne doivent pas diminuer la précision de la mesure du volume de liquide, notamment en générant un volume non comptabilisé. Pour cela, les positions angulaires des cannelures 20 portées par la paroi périphérique externe du piston 2 ont été calculées de manière à ce que lesdites cannelures ne coïncident pas avec les cannelures portées par la surface périphérique interne de la chambre 1. Le positionnement angulaire des cannelures portées par le château 9 et par la paroi périphérique interne du piston 2 est calculé dans le même but. En d'autres termes, les cannelures portées par la paroi périphérique externe du piston 2 et par la surface périphérique interne de la chambre 1 sont décalées angulairement. Il en est de même des cannelures portées par le château 9 et par la paroi périphérique interne du piston 2.

L'ensemble du compteur de liquide objet de l'invention est représenté à la figure 4. Un tel compteur est destiné à être placé sur une conduite de liquide de manière à ce que le liquide circulant dans ladite conduite circule également dans le compteur. Un tel dispositif comporte une chambre 1 conforme à l'invention, la circulation du liquide au sein de la chambre 1 provoquant les oscillations du piston 2. On dispose donc d'un compteur de liquide du type comprenant, logée à l'intérieur d'un corps 23, une chambre 1 de mesure cylindrique conforme à l'invention. Ce compteur comporte en outre un dispositif 21 entraîneur, généralement magnétique, présentant un arbre entraîné en rotation par le mouvement du piston 2 présent dans ladite chambre 1 cylindrique. Ce dispositif 21 entraîneur est couplable à un dispositif 22 entraîné permettant de compter les rotations dudit dispositif 21 entraîneur. Ce dispositif 21 entraîneur est constitué d'une seule pièce, ladite pièce étant introduite dans un alésage 24 présent dans le couvercle de ladite chambre cylindrique afin de faciliter l'assemblage de la chambre 1 et dudit dispositif 21 entraîneur. La réalisation du dispositif 21 entraîneur magnétique en une seule pièce permet un montage facilité dudit dispositif 21. En effet, cette conception permet d'introduire le dispositif 21 entraîneur dans un alésage 24 du couvercle 4 de la chambre 1 sans avoir à effectuer d'opération à l'intérieur de ladite chambre 1.

De manière générale, l'extrémité de l'axe du piston 2, opposée à celle destinée à coopérer avec le plot 10, coopère avec au moins une excroissance 26 portée par le dispositif 21 ou par engagement positif de formes géométriques complémentaires afin de transmettre le mouvement du piston 2 audit dispositif 21 entraîneur. Plusieurs moyens de transmission du mouvement du piston 2 au dispositif 21 entraîneur peuvent donc être envisagés. Dans un premier mode de réalisation, l'extrémité de l'axe du piston 2, opposé à celle destinée à coopérer avec le plot 10, et l'arbre du dispositif 21 entraîneur sont rendus solidaires en déplacement par engagement positif de formes géométriques complémentaires. Dans ce cas, l'axe du dispositif 21 entraîné est muni d'au moins une gorge de forme complémentaire de celle du demi-axe 12 du piston 2. Ainsi, ledit demi-axe 12 s'insère dans la gorge de l'axe du dispositif 21 et entraîne ledit axe en rotation lors de la rotation des demi-axes 12, 13 du piston 2 autour du plot 10. Dans un autre mode de réalisation, l'extrémité 12 de l'axe du piston 2 opposée à celle destinée à coopérer avec le plot 10, coopère avec au moins une excroissance portée par le dispositif 21 entraîneur afin de transmettre le mouvement du piston 2 au dispositif 21 entraîneur. Dans ce cas, le mouvement du piston 2 est transformé en rotation du dispositif 21 entraîneur par poussée du demi-axe 12 du piston 2 sur une excroissance radiale portée par l'axe dudit dispositif 21. Le compteur peut être avantageusement conçu pour minimiser le bruit qu'il engendre. A cet effet, il est prévu, entre la chambre 1 cylindrique et le corps 23 du compteur, des pièces en matériau élastique, généralement en élastomère, afin notamment d'atténuer la transmission des vibrations de la chambre 1 vers ledit corps 23, minimisant ainsi le bruit généré par ledit compteur. Indépendamment des moyens mis en oeuvre à l'intérieur de la chambre 1 pour minimiser le bruit engendré par un tel compteur, ces pièces rapportées permettent de minimiser fortement la transmission des vibrations issues de la chambre 1 vers le corps 23 du compteur. Cette diminution des vibrations externes réduit considérablement le bruit perçu par un utilisateur d'un compteur de liquide conforme à l'invention par rapport à un compteur traditionnel.

## Revendications

1. Chambre (1) de mesure cylindrique de compteur de liquide à piston oscillant, du type comportant au moins une paroi (3) latérale périphérique, un couvercle (4) et un fond (8), ledit fond (8) supportant un château (9), se présentant sous la forme d'une pièce cylindrique ouverte munie, au voisinage de son centre, d'un plot (10) cylindrique de diamètre inférieur à celui dudit château (9), pour former, entre la surface périphérique interne dudit château (9) et la surface périphérique externe du plot, un chemin de guidage circulaire, ladite chambre (1) renfermant un piston (2) de corps cylindrique animé en déplacement par le liquide circulant à l'intérieur de ladite chambre (1), ledit piston (2) étant muni intérieurement d'un axe coaxial audit corps du piston, cet axe pouvant s'insérer dans le chemin de guidage circulaire, de manière à réaliser un guidage du piston (2) lors de ses oscillations à l'intérieur de la chambre (1),le plot (10) et le château (9) étant réalisés sous la forme d'une seule pièce de manière à garantir la coaxialité dudit plot (9) et dudit château (10), **caractérisée en ce que** les parois périphériques interne et externe du piston (2) ainsi que la paroi latérale interne de la chambre (1) sont munies de cannelures (20) axiales afin notamment d'y piéger les impuretés présentes dans le liquide à compter.

2. Chambre (1) de mesure cylindrique de compteur de liquide à piston oscillant selon la revendication 1,
**caractérisée en ce que** l'axe du piston (2) destiné à se déplacer autour du plot (10), formant axe pivot, se présente sous la forme de deux demi-axes (12, 13) portés chacun par une face d'une cloison (11) compartimentant transversalement le corps du cylindre.

3. Chambre (1) de mesure cylindrique de compteur de liquide à piston oscillant selon l'une des revendications 1 ou 2,
**caractérisée en ce que** le chemin de guidage circulaire de l'axe du piston délimité par la surface périphérique extérieure du plot (10) et la surface périphérique intérieure du château (9) est dimensionné pour autoriser l'axe du piston (2) à prendre appui indifféremment sur l'une ou l'autre desdites deux surfaces, assurant ainsi un guidage fin dudit piston (2) lors de son mouvement, notamment pour réduire le bruit généré par ledit mouvement.

4. Chambre (1) de mesure cylindrique de compteur de liquide à piston oscillant selon l'une des revendications 1 à 3,
**caractérisée en ce que** la chambre (1) comporte au moins une entrée et une sortie de fluide disposées de part et d'autre d'une cloison (5) fixe s'étendant radialement entre la surface périphérique intérieure de ladite chambre (1) et la surface périphérique extérieure du château (9) de manière à imposer un parcours au fluide entre l'entrée (6) et la sortie (7) de la chambre (1), le piston (2) étant muni, le long d'une de ses génératrices, d'une ouverture (15) radiale, telle qu'une échancrure, permettant d'enfiler ledit piston (2) sur la cloison (5), de telle sorte que les rebords de l'échancrure, dites lèvres, du piston glissent le long des parois de la cloison (5) fixe lors du déplacement de l'axe du piston (2) dans son chemin de guidage circulaire, ladite paroi (5) fixe étant réalisée sous la forme d'une seule pièce avec la paroi périphérique de la chambre (1) et/ou avec la paroi périphérique du château (9), de manière à améliorer l'étanchéité des liaisons.

5. Chambre (1) de mesure cylindrique de compteur de liquide à piston oscillant selon la revendication 4,
**caractérisée en ce qu'**elle comporte au moins deux entrées (16, 17), l'une (16) située dans le fond (8) de la chambre (1), l'autre (17) étant positionnée sur la paroi latérale de ladite chambre (1) et/ou deux sorties (18, 19), l'une (18) située dans le fond (8) de la chambre (1), l'autre (19) étant positionnée sur la paroi latérale de ladite chambre (1), afin notamment de diminuer le temps de remplissage de la boîte et de réduire les différences de pression à l'intérieur de la chambre (1).

6. Compteur (27) de liquide du type comprenant, renfermée à l'intérieur d'un corps (23), une chambre (1) de mesure cylindrique, ladite chambre (1) comportant au moins une paroi (3) latérale périphérique, un couvercle (4) et un fond (8), ledit fond (8) supportant un château (9), se présentant sous la forme d'une pièce cylindrique ouverte munie, au voisinage de son centre, d'un plot (10) cylindrique de diamètre inférieur à celui dudit château (9), ladite chambre (1) renfermant un piston (2) de corps cylindrique animé en déplacement par le liquide circulant à l'intérieur de ladite chambre (1), ledit piston (2) étant muni intérieurement d'un axe coaxial audit corps du piston, cet axe pouvant s'insérer entre la surface périphérique interne du château (9) et le plot (10) afin de coopérer, par sa surface latérale, avec la surface latérale extérieure du plot (10) de manière à réaliser un guidage du piston (2) lors de ses oscillations à l'intérieur de la chambre (1), ledit compteur comportant en outre un dispositif (21) entraîneur, généralement magnétique, présentant un arbre entraîné en rotation par le mouvement d'un piston (2), ce dispositif (21) entraîneur étant couplable à un dispositif (22) entraîné permettant de compter les rotations dudit dispositif (21) entraîneur,
**caractérisé en ce que** la chambre (1) de mesure est conforme à l'une des revendications 1 à 5,

7. Compteur (27) de liquide selon la revendication 6,
**caractérisé en ce que** le dispositif (21) entraîneur est constitué d'une seule pièce, ladite pièce étant introduite dans un alésage (24) présent dans le couvercle (4) de ladite chambre (1) cylindrique afin de faciliter l'assemblage de la chambre (1) et dudit dispositif (21) entraîneur.

8. Compteur (27) de liquide selon l'une des revendications 6 ou 7,
**caractérisé en ce que** l'extrémité de l'axe du piston (2), opposée à celle destinée à coopérer avec le plot (10), coopère avec au moins une excroissance (26) portée par le dispositif (21) ou par engagement positif de formes géométriques complémentaires afin de transmettre le mouvement du piston (2) audit dispositif (21) entraîneur.

9. Compteur (27) de liquide selon l'une des revendications 6 à 8,
**caractérisé en ce qu'**il est prévu, entre la chambre (1) cylindrique et le corps (23) du compteur, des pièces en matériau élastique, généralement en élastomère, afin notamment d'atténuer la transmission des vibrations de la chambre (1) vers ledit corps (23), minimisant ainsi le bruit généré par ledit compteur.

## Patentansprüche

1. Zylindrische Flüssigkeitsmesskammer (1) mit Schwingkolben, die mindestens eine Umfangsseitenwand (3), eine Abdeckung (4) und einen Boden (8) aufweist, wobei der Boden (8) einen Aufbau (9) trägt, der die Form eines offenen zylindrischen Teils aufweist, das in der Nähe seines Zentrums mit einem zylindrischen Bolzen (10) versehen ist, dessen Durchmesser kleiner ist als der des Aufbaus (9), um zwischen der inneren Umfangsfläche des Aufbaus (9) und der äußeren Umfangsfläche des Bolzens eine kreisförmige Führungsbahn zu bilden, wobei die Kammer (1) einen Kolben (2) mit zylindrischem Körper enthält, der von der Flüssigkeit, die im Innern der Kammer (1) zirkuliert, bewegt wird, wobei der Kolben (2) innen mit einer Achse versehen ist, die koaxial zum Kolbenkörper verläuft, wobei diese Achse in die kreisförmige Führungsbahn eingefügt werden kann, um den Kolben (2), während er im Innern der Kammer (1) schwingt, zu führen, wobei der Bolzen (10) und der Aufbau (9) in einstückiger Form hergestellt sind, um die Koaxialität des Bolzens (10) und des Aufbaus (9) zu garantieren, **dadurch gekennzeichnet, dass** die inneren und äußeren Umfangswände des Kolbens (2) sowie die innere Seitenwand der Kammer (1) mit axialen Rillen (20) versehen sind, um dort insbesondere die Verunreinigungen zu binden, die in der zu messenden Flüssigkeit, vorhanden sind.

2. Zylindrische Flüssigkeitsmesskammer (1) mit Schwingkolben nach Anspruch 1,
**dadurch gekennzeichnet, dass** die Achse des Kolbens (2), die dazu bestimmt ist, sich um den Bolzen (10), der die Drehachse bildet, herum zu bewegen, die Form von zwei Halbachsen (12, 13) aufweist, die jeweils von einer Seite einer Trennwand (11) getragen werden, die den Körper des Zylinders quer abteilt.

3. Zylindrische Flüssigkeitsmesskammer (1) mit Schwingkolben nach einem der Ansprüche 1 oder 2,
**dadurch gekennzeichnet, dass** die kreisförmige Führungsbahn der Achse des Kolbens, die durch die äußere Umfangsoberfläche des Bolzens (10) und die innere Umfangsoberfläche des Aufbaus (9) begrenzt ist, dimensioniert ist, damit die Achse des Kolbens (2) gleichermaßen auf einer der beiden Flächen zur Auflage kommen kann, wodurch eine feine Führung des Kolbens (2) während seiner Bewegung gewährleistet wird, insbesondere um das durch die Bewegung erzeugte Geräusch zu reduzieren.

4. Zylindrische Flüssigkeitsmesskammer (1) mit Schwingkolben nach einem der Ansprüche 1 bis 3,
**dadurch gekennzeichnet, dass** die Kammer (1) mindestens einen Fluideinlass und einen Fluidauslass aufweist, die auf beiden Seiten einer festen Trennwand (5) angeordnet sind, die sich radial zwischen der inneren Umfangsfläche der Kammer (1) und der äußeren Umfangsfläche des Aufbaus (9) erstreckt, um den Weg des Fluids zwischen dem Einlass (6) und dem Auslass (7) der Kammer (1) zu bestimmen, wobei der Kolben (2) entlang einer seiner Generatoren mit einer radialen Öffnung (15), wie beispielsweise einer Einbuchtung, versehen ist, die es ermöglicht, den Kolben (2) in die Trennwand (5) einzuschieben, so dass die Ränder der Einbuchtung, genannt Lippen, des Kolbens entlang der Wände der festen Trennwand (5) während der Verschiebung der Achse des Kolbens (2) in seiner kreisförmigen Führungsbahn gleiten, wobei die feste Wand (5) in einstückiger Form mit der Umfangswand der Kammer (1) und/oder mit der Umfangswand des Aufbaus (9) hergestellt wird, um die Dichtheit der Verbindungen zu verbessern.

5. Zylindrische Flüssigkeitsmesskammer (1) mit Schwingkolben nach Anspruch 4,
**dadurch gekennzeichnet, dass** sie mindestens zwei Einlässe (16, 17), wobei der eine (16) im Boden (8) der Kammer (1) angeordnet ist und der andere (17) auf der Seitenwand der Kammer (1) positioniert ist, und/oder zwei Auslässe (18, 19) aufweist, wobei der eine (18) im Boden (8) der Kammer (1) angeordnet ist und der andere (19) auf der Seitenwand der Kammer (1) positioniert ist, um insbesondere die Füllzeit des Kastens zu verringern und um die Druckunterschiede im Innern der Kammer (1) zu reduzieren.

6. Flüssigkeitsmesser (27), der, enthalten im Innern eines Körpers (23), eine zylindrische Messkammer (1) aufweist, wobei die Kammer (1) mindestens eine Umfangsseitenwand (3), eine Abdeckung (4) und einen Boden (8) aufweist, wobei der Boden (8) einen Aufbau (9) trägt, der die Form eines offenen zylindrischen Teils aufweist, das in der Nähe seines Zentrums mit einem zylindrischen Bolzen (10) versehen ist, dessen Durchmesser kleiner ist als der des Aufbaus (9), wobei die Kammer (1) einen Kolben (2) mit zylindrischem Körper enthält, der von der Flüssigkeit, die im Innern der Kammer (1) zirkuliert, bewegt wird, wobei der Kolben (2) innen mit einer Achse versehen ist, die koaxial zum Kolbenkörper verläuft, wobei diese Achse zwischen die innere Umfangsfläche des Aufbaus (9) und den Bolzen (10) eingefügt werden kann, um mit ihrer Seitenfläche mit der äußeren Seitenfläche des Bolzens (10) zusammenzuwirken, um den Kolben (2), während er im Innern der Kammer (1) schwingt, zu führen, wobei der Messer ferner eine im Allgemeinen magnetische Antriebsvorrichtung (21) aufweist, die eine Welle aufweist, die durch die Bewegung eines Kolbens (2) drehend angetrieben wird, wobei diese Antriebsvorrichtung (21) mit einer angetriebenen Vorrichtung (22) koppelbar ist, die es ermöglicht, die Drehungen der Antriebsvorrichtung (21) zu zählen,
**dadurch gekennzeichnet, dass** die Messkammer (1) gemäß einem der Ansprüche 1 bis 5 ausgebildet ist.

7. Flüssigkeitsmesser (27) nach Anspruch 6,
**dadurch gekennzeichnet, dass** die Antriebsvorrichtung (21) einstückig ausgebildet ist, wobei das Stück in eine Bohrung (24) eingeführt wird, die in dem Deckel (4) der zylindrischen Kammer (1) vorhanden ist, um den Zusammenbau der Kammer (1) und der Antriebsvorrichtung (21) zu erleichtern.

8. Flüssigkeitszähler (27) nach einem der Ansprüche 6 oder 7,
**dadurch gekennzeichnet, dass** das Ende der Achse des Kolbens (2), das dem gegenüber liegt, das dazu bestimmt ist, mit dem Bolzen (10) zusammenzuwirken, mit mindestens einer Ausstülpung (26), die von der Vorrichtung (21) getragen wird, oder durch formschlüssigen Eingriff komplementärer geometrischer Formen, zusammenwirkt, um die Bewegung des Kolbens (2) auf die Antriebsvorrichtung (21) zu übertragen.

9. Flüssigkeitszähler (27) nach einem der Ansprüche 6 bis 8,
**dadurch gekennzeichnet, dass** zwischen der zylindrischen Kammer (1) und dem Körper (23) des Messers Teile aus elastischem Material, im Allgemeinen aus Elastomer, vorgesehen sind, um insbesondere die Übertragung der Vibrationen der Kammer (1) auf den Körper (23) zu dämpfen, wodurch das von dem Messer erzeugte Geräusch minimiert wird.

## Claims

1. Oscillating-piston liquid meter cylindrical measurement chamber (1) of the type comprising at least one peripheral lateral wall (3), a cover (4) and a bottom (8), the said bottom (8) supporting a superstructure (9) taking the form of an open cylindrical part provided, in the vicinity of its centre, with a cylindrical peg (10) having a smaller diameter than that of the said superstructure (9), in order to form a circular guideway between the internal peripheral surface of the said superstructure (9) and the external peripheral surface of the peg, the said chamber (1) containing a piston (2) with a cylindrical body moved by the liquid circulating within the said chamber (1), the said piston (2) being provided internally with a pin which is coaxial to the said body of the piston, it being possible for this pin to be inserted into the circular guideway so as to guide the piston (2) during its oscillations within the chamber (1), the peg (10) and the superstructure (9) being produced in the form of a single part so as to ensure the coaxiality of the said peg (10) and the said superstructure (9), **characterized in that** the internal and external peripheral walls of the piston (2) and also the internal lateral wall of the chamber (1) are provided with axial grooves (20) in order in particular to trap therein the impurities present in the liquid to be metered.

2. Oscillating-piston liquid meter cylindrical measurement chamber (1) according to Claim 1, **characterized in that** the pin of the piston (2) intended to move around the peg (10), forming a pivot axis, takes the form of two half-pins (12, 13) each borne by a face of a partition (11) transversely compartmentalizing the body of the cylinder.

3. Oscillating-piston liquid meter cylindrical measurement chamber (1) according to either of Claims 1 and 2,
**characterized in that** the circular guideway for the pin of the piston that is delimited by the outer peripheral surface of the peg (10) and the inner peripheral surface of the superstructure (9) is dimensioned to allow the pin of the piston (2) to bear equally on one or the other of the said two surfaces, thus ensuring fine guiding of the said piston (2) during its movement, in particular to reduce the noise generated by the said movement.

4. Oscillating-piston liquid meter cylindrical measurement chamber (1) according to one of Claims 1 to 3,
**characterized in that** the chamber (1) comprises at least one fluid inlet and one fluid outlet which are arranged on either side of a fixed partition (5) extending radially between the inner peripheral surface of the said chamber (1) and the outer peripheral surface of the superstructure (9) so as to impose a course on the fluid between the inlet (6) and the outlet (7) of the chamber (1), the piston (2) being provided, along one of its generatrixes, with a radial opening (15), such as a notch, for fitting the said piston (2) on the partition (5), in such a way that the edges of the notch, termed lips, of the piston slide along the walls of the fixed partition (5) during the movement of the pin of the piston (2) in its circular guideway, the said fixed wall (5) being produced in the form of a single part with the peripheral wall of the chamber (1) and/or with the peripheral wall of the superstructure (9) so as to improve the sealing of the connections.

5. Oscillating-piston liquid meter cylindrical measurement chamber (1) according to Claim 4, **characterized in that** it comprises at least two inlets (16, 17), one (16) situated in the bottom (8) of the chamber (1), the other (17) being positioned on the lateral wall of the said chamber (1), and/or two outlets (18, 19) one (18) situated in the bottom (8) of the chamber (1), the other (19) being positioned on the lateral wall of the said chamber (1), in order in particular to reduce the time for filling the box and to reduce the pressure differences within the chamber (1).

6. Liquid meter (27) of the type comprising a cylindrical measurement chamber (1) contained within a body (23), the said chamber (1) comprising at least one peripheral lateral wall (3), a cover (4) and a bottom (8), the said bottom (8) supporting a superstructure (9) taking the form of an open cylindrical part provided, in the vicinity of its centre, with a cylindrical peg (10) having a smaller diameter than that of the said superstructure (9), the chamber (1) containing a piston (2) with a cylindrical body moved by the liquid circulating within the said chamber (1), the said piston (2) being provided internally with a pin which is coaxial to the said body of the piston, it being possible for this pin to be inserted between the internal peripheral surface of the superstructure (9) and the peg (10) in order to cooperate, by way of its lateral surface, with the outer lateral surface of the peg (10) so as to guide the piston (2) during its oscillations within the chamber (1), the said meter additionally comprising a generally magnetic driver device (21) having a shaft driven to rotate by the movement of a piston (2), this driver device (21) being able to be coupled to a driven device (22) for counting the rotations of the said driver device (21),
**characterized in that** the measurement chamber (1) is in accordance with one of Claims 1 to 5.

7. Liquid meter (27) according to Claim 6,
**characterized in that** the driver device (21) is made up of a single part, the said part being introduced into a bore (24) present in the cover (4) of the said cylindrical chamber (1) in order to facilitate the assembly of the chamber (1) and the driver device (21).

8. Liquid meter (27) according to either of Claims 6 and 7,
**characterized in that** the end of the pin of the piston (2) that is opposite to that intended to cooperate with the peg (10) cooperates with at least one protuberance (26) borne by the device (21) or by positive engagement of complementary geometric shapes in order to transmit the movement of the piston (2) to the said driver device (21).

9. Liquid meter (27) according to one of Claims 6 to 8,
**characterized in that** parts made of elastic material, generally of elastomer, are provided between the cylindrical chamber (1) and the body (23) of the meter in order in particular to attenuate the transmission of vibrations from the chamber (1) to the said body (23), thus minimizing the noise generated by the said meter.
